# EUROPÄISCHE PATENTSCHRIFT

(11) **EP 3 380 364 B1**
(45) Veröffentlichungstag und Bekanntmachung des Hinweises auf die Patenterteilung: **19.02.2020**
(21) Anmeldenummer: 16788658.9
(22) Anmeldetag: 25.10.2016
(51) Int. Cl.: B60R 11/02, B60R 11/04, B60R 1/00

(54) **KRAFTFAHRZEUG MIT EINER ELEKTRONISCHEN EINHEIT**
MOTOR VEHICLE COMPRISING AN ELECTRONIC DEVICE
VÉHICULE AUTOMOBILE DOTÉ D'UNE UNITÉ ÉLECTRONIQUE

(30) Priorität: 23.11.2015 DE 102015223056
(43) Veröffentlichungstag der Anmeldung: 03.10.2018
(73) Patentinhaber: Magna Mirrors Holding GmbH, 63877 Sailauf (DE)
(72) Erfinder: KORULTAY, Erkan, 63768 Hösbach (DE); WEIMER, Frank, 97877 Wertheim (DE)
(74) Vertreter: Völger, Silke Beatrix
(86) Internationale Anmeldenummer: PCT/EP2016/075657
(87) Internationale Veröffentlichungsnummer: WO 2017/089056

(56) Entgegenhaltungen:
- WO-A1-2015/111514
- JP-A- 2013 055 416
- JP-A- 2013 124 957
- US-A1- 2013 157 647
- US-B1- 6 281 804

## Beschreibung

### Gebiet der Erfindung

Die vorliegende Erfindung betrifft ein Kraftfahrzeug umfassend eine elektronische Einheit, wobei die elektronische Einheit ein Display und eine integrierte Kamera aufweist.

### Stand der Technik

Derzeit sind Kraftfahrzeuge mit Innenspiegel in Verwendung bei denen die Innenspiegel zusätzliche Funktionen übernehmen können wie beispielsweise Navigation, Warnzeichen anzeigen, wie beispielsweise Totwinkelanzeige, Gurtwarnung etc.

Aus der DE 201 18 868 U1 ist ein Rückspiegel mit einem Monitor bekannt, welcher an eine Mehrzahl von Signalquellen elektrisch anschließbar ist.

In der DE 10 2012 009 546 A1 wird ein multifunktionaler Innenspiegel für ein Fahrzeug beschrieben, der eine Spiegelfläche und Befestigungsmittel zum lösbaren Befestigen eines Mobiltelefons an dem Innenspiegel aufweist, wobei zumindest ein Teil der Spiegelfläche des Innenspiegels vor einer berührungsempfindlichen Oberfläche des Mobiltelefons angeordnet ist.

Aus der DE 10 2010 008 324 A1 ist ein elektronisches Gerät bekannt, beispielsweise ein Smartphone, das an der Innenseite des Heckfensters montiert wird, um als Rangierhilfe für ein Fahrzeug zu dienen.

Aus der DE 20 2014 008 368 U1 sowie der WO 2015/111514 A1 sind Klemmvorrichtungen bzw. Halterungen bekannt, die am Innenspiegel eines Fahrzeugs die Befestigung eines Smartphones als Zusatz zum Innenspiegel erlauben.

Bei solchen Vorrichtungen ist es erwünscht, dass sie weitere zusätzliche Funktionen erfüllen können, wobei diese Vorrichtungen eine künstliche Intelligenz aufweisen sollen, welche zur Verarbeitung und Ausführung dieser zusätzlichen Funktionen geeignet ist.

Das Dokument JP 2013 055416 A zeigt eine elektronische Einheit mit einem Display in einem Kraftfahrzeuginnenraum, wobei die elektronische Einheit ein Smartphone ist. Auf dem Display werden Umgebungsbilder des Kraftfahrzeugs angezeigt, die von mehreren externen Kameras aufgenommen werden.

Aus der JP 2013 124957 A ist ein Kraftfahrzeug umfassend eine elektronische Einheit bekannt. Die elektronische Einheit weist ein Display mit integrierter Kamera auf und ist im Bereich der Instrumententafel angeordnet. Die Kamera nimmt Umgebungsbilder vom Verkehr auf, der in Fahrtrichtung nach vorne gerichtet ist. Über Kameras im seitlichen Bereich des Kraftfahrzeugs und im Heckbereich können zusätzlich entsprechende Umgebungsbilder dieser Bereiche erfasst und angezeigt werden.

Die US 6,281,804 B1 offenbart ein elektronisches Gerät mit einem Display, das im Bereich des Innenspiegels angeordnet ist und eine integrierte Kamera aufweist. Über die integrierte Kamera kann das Gesicht des Fahrers aufgenommen und auf dem Display angezeigt werden. In dieser Ausführung erfüllt das Display die Funktion eines Schminkspiegels. Über eine im Heckbereich angeordnete Kamera können Umgebungsbilder vom rückwärtigen Bereich aufgenommen und auf dem Display angezeigt werden.

Des Weiteren ist aus der US 2013/0157647 A1 ein elektronisches Gerät bekannt, welches an verschiedenen Stellen im Kraftfahrzeug lösbar über eine Halterung angeordnet sein kann. Das elektronische Gerät dient zusätzlich zu einem konventionellen Innenspiegel zur Fahrerassistenz.

### Zusammenfassung der Erfindung

Es ist eine Aufgabe der Erfindung, ein Kraftfahrzeug vorzusehen, welches eine elektronische Einheit umfasst, die geeignet ist, eine Vielzahl von Funktionen erfüllen zu können, weshalb zusätzliche Geräte nicht erforderlich sind, wodurch Platz und Kosten eingespart werden können.

Die Lösung der Aufgabe erfolgt durch ein Kraftfahrzeug umfassend eine elektronische Einheit, wobei die elektronische Einheit an einer für einen konventionellen Innenspiegel üblichen Position befestigt ist und den Innenspiegel ersetzt, und durch die Kamera ein Bereich der dem durch einen konventionellen Fahrzeuginnenspiegel dargestellten Bereich entspricht, aufgenommen wird.
Diese Anordnung ist insofern vorteilhaft, da ein Raumbedarf, der bisher nur als Spiegelfunktion gedient hat, nun für eine Vielzahl von Funktionen, welche nur durch die elektronische Einheit bereitgestellt wird, genutzt werden kann, und die elektronische Einheit nicht an einer anderen Stelle im Kraftfahrzeug wie der an der Mittelkonsole oder am Armaturenbrett, wo die Bedienbarkeit des Gangschalthebels, der Handbremse der Bedienknöpfe im Armaturenbrett etc. eingeschränkt wird, befestigt werden muss.

Ein weiterer Vorteil ist, dass die elektronische Einheit lösbar ist, und daher nach dem Fahren entfernt werden kann und auch außerhalb des Kraftfahrzeugs genutzt werden kann.

Weiterbildungen der Erfindung sind in den abhängigen Ansprüchen, der Beschreibung sowie den beigefügten Zeichnungen angegeben.

Erfindungsgemäß ist eine Halterung für die elektronische Einheit vorgesehen, wobei die Halterung an einer für einen konventionellen Innenspiegel üblichen Position angeordnet, welche im Allgemeinen an der Frontscheibe fahrzeugmittig in Augenhöhe des Fahrzeuglenkers.

Die Halterung für die elektronische Einheit weist dabei eine Geometrie auf, welche an die Größe und/oder Form der elektronischen Einheit anpassbar ist.

Eine solche universelle Halterung erlaubt es jede beliebige elektronische Einheit, unabhängig vom Hersteller der elektronischen Einheit, in oder an der Halterung zu befestigen.

In einer bevorzugten Ausführungsform weist die Halterung eine Energieversorgungsleitung für die elektronische Einheit.

Da die meisten elektronischen Einheiten gleiche Energieversorgungsanschlüsse aufweisen, kann die Energieversorgungsleitung beispielsweise mit einem USB Anschluss ausgestattet sein. Falls die elektronische Einheit einen anderen Energieversorgungsanschluss aufweist, kann ein passender Adapter zwischen der Energieversorgungsleitung und der elektronischen Einheit angeordnet werden.

In einer weiteren erfindungsgemäßen Ausführungsform ist die elektronische Einheit mit externen Signalquellen verbindbar.

Diese Signale können "wireless" oder über ein entsprechendes Datenkabel an die elektronische Einheit übertragen werden.

Die elektronische Einheit weist eine Software auf, welche die Helligkeit des Displays in Abhängigkeit des Umgebungslichts und/oder der Bildschärfe und/oder Kontrast automatisch anpasst. Dabei kann die elektronische Einheit unterschiedliche Software oder Apps für die jeweils unterschiedlichen Anwendungen aufweisen, wobei solche Apps einfach aktualisierbar sind.

In einer weiteren erfindungsgemäßen Ausführungsform weist die elektronische Einheit eine Telefonfunktion und/oder eine GPS-Funktion und/oder eine Internetverbindung und/oder eine Bluetooth-Funktion und/oder eine Bordcomputer-Funktion auf.

Beispielsweise dient die elektronische Einheit als Telefon, die es ermöglicht, während dem Fahren über eine Freisprecheinrichtung ungehindert telefonieren zu können.

Eine Internetverbindung ermöglicht es, dass die für die Vielzahl an Funktionen erforderlichen Apps jederzeit aktualisiert werden können, wodurch jederzeit ein störungsfreier Betrieb ermöglicht ist.

Durch die Internetverbindung und der GPS-Funktion ist es möglich, dass die elektronische Einheit als Navigationseinheit dienen kann, wobei am Display die Routenführung anzeigbar ist.

Die elektronische Einheit kann des Weiteren die Funktion eines Bordcomputers übernehmen, was den Vorteil bietet, dass die elektronische Einheit im Normalfall leistungsstärker ist, als die meisten derzeit in Verwendung befindlichen Bordcomputer.

Es wird darauf hingewiesen, dass diese Aufzählung keine Einschränkung darstellt, sondern lediglich einige sinnvolle Anwendungen anführen soll.

Erfindungsgemäß ist die elektronische Einheit ein Smartphone oder ein Tablet Computer. Es versteht sich von selbst, dass jedes ähnlich aufgebaute elektronische Gerät, das die genannten Funktionen erfüllt, einsetzbar ist.

## Patentansprüche

1. Kraftfahrzeug umfassend eine elektronische Einheit, wobei die elektronische Einheit ein Display und eine integrierte Kamera aufweist, und wobei die elektronische Einheit im Kraftfahrzeug lösbar an einer Halterung befestigt ist, und wobei die Kamera einen Bereich aufnimmt, und wobei der von der Kamera aufgenommene Bereich auf dem Display der elektronischen Einheit anzeigt ist, **dadurch gekennzeichnet, dass** die elektronische Einheit an einer für einen konventionellen Innenspiegel üblichen Position befestigt ist und den Innenspiegel ersetzt, und durch die Kamera ein Bereich der dem durch einen konventionellen Fahrzeuginnenspiegel dargestellten Bereich entspricht, aufgenommen wird.

2. Kraftfahrzeug nach zumindest einem der vorhergehenden Ansprüche, **dadurch gekennzeichnet, dass** die Halterung für die elektronische Einheit in ihrer Geometrie an die Größe und/oder Form anpassbar ist.

3. Kraftfahrzeug nach zumindest einem der vorhergehenden Ansprüche, **dadurch gekennzeichnet, dass** die Halterung eine Energieversorgungsleitung für die elektronische Einheit aufweist.

4. Kraftfahrzeug nach zumindest einem der vorhergehenden Ansprüche, **dadurch gekennzeichnet, dass** die elektronische Einheit mit externen Signalquellen verbindbar ist.

5. Kraftfahrzeug nach zumindest einem der vorhergehenden Ansprüche, **dadurch gekennzeichnet, dass** die elektronische Einheit eine Software aufweist, welche die Helligkeit des Displays in Abhängigkeit des Umgebungslichts und/oder Bild-Schärfe und/oder Kontrast automatisch anpasst.

6. Kraftfahrzeug nach zumindest einem der vorhergehenden Ansprüche, **dadurch gekennzeichnet, dass** die elektronische Einheit eine Telefonfunktion und/oder eine GPS-Funktion und/oder Bluetooth-Funktion und/oder Internetverbindung und/oder Bordcomputer-Funktion aufweist.

7. Kraftfahrzeug nach zumindest einem der vorhergehenden Ansprüche, **dadurch gekennzeichnet, dass** die elektronische Einheit ein Smartphone oder ein Tablet Computer ist.

## Claims

1. Motor vehicle comprising an electronic unit, the electronic unit having a display and an integrated camera, and the electronic unit being releasably fastened to a holder in the motor vehicle, and the camera recording an area, and the area recorded by the camera being displayed on the display of the electronic unit, **characterized in that** the electronic unit is fastened at a position customary for a conventional inside mirror and replaces the inside mirror, and the camera records an area corresponding to the area presented by a conventional vehicle inside mirror.

2. Motor vehicle according to at least one of the preceding claims, **characterized in that** the holder for the electronic unit can be adapted, in terms of its geometry, to the size and/or shape.

3. Motor vehicle according to at least one of the preceding claims, **characterized in that** the holder has an energy supply line for the electronic unit.

4. Motor vehicle according to at least one of the preceding claims, **characterized in that** the electronic unit can be connected to external signal sources.

5. Motor vehicle according to at least one of the preceding claims, **characterized in that** the electronic unit has software which automatically adapts the brightness of the display on the basis of the ambient light and/or image sharpness and/or contrast.

6. Motor vehicle according to at least one of the preceding claims, **characterized in that** the electronic unit has a telephone function and/or a GPS function and/or a Bluetooth function and/or an Internet connection and/or an on-board computer function.

7. Motor vehicle according to at least one of the preceding claims, **characterized in that** the electronic unit is a smartphone or a tablet computer.

## Revendications

1. Véhicule automobile comprenant une unité électronique, l'unité électronique possédant un afficheur et une caméra intégrée, et l'unité électronique étant fixée de manière amovible à une attache dans le véhicule automobile, et la caméra enregistrant une zone, et la zone enregistrée par la caméra étant affichée sur l'afficheur de l'unité électronique, **caractérisé en ce que** l'unité électronique est fixée à une position habituelle pour un rétroviseur intérieur et remplace le rétroviseur intérieur, et une zone qui correspond à la zone représentée par un rétroviseur intérieur de véhicule conventionnel est enregistrée par la caméra.

2. Véhicule automobile selon au moins l'une des revendications précédentes, **caractérisé en ce que** la forme géométrique de l'attache pour l'unité électronique peut être adaptée à la taille et/ou à la forme.

3. Véhicule automobile selon au moins l'une des revendications précédentes, **caractérisé en ce que** l'attache possède une ligne d'alimentation en énergie pour l'unité électronique.

4. Véhicule automobile selon au moins l'une des revendications précédentes, **caractérisé en ce que** l'unité électronique peut être reliée à des sources de signaux externes.

5. Véhicule automobile selon au moins l'une des revendications précédentes, **caractérisé en ce que** l'unité électronique possède un logiciel qui adapte automatiquement la luminosité de l'afficheur en fonction de la lumière ambiante et/ou de la netteté de l'image et/ou du contraste.

6. Véhicule automobile selon au moins l'une des revendications précédentes, **caractérisé en ce que** l'unité électronique possède une fonction de téléphone et/ou une fonction GPS et/ou une fonction Bluetooth et/ou une connexion Internet et/ou une fonction d'ordinateur de bord.

7. Véhicule automobile selon au moins l'une des revendications précédentes, **caractérisé en ce que** l'unité électronique est un Smartphone ou une tablette électronique.
